# EUROPÄISCHE PATENTSCHRIFT

(11) **EP 3 010 859 B1**
(45) Veröffentlichungstag und Bekanntmachung des Hinweises auf die Patenterteilung: **31.10.2018**
(21) Anmeldenummer: 14727195.1
(22) Anmeldetag: 27.05.2014
(51) Int. Cl.: C02F 1/38, C02F 1/44, C02F 1/52, B01D 61/14, C02F 101/20, C02F 101/32

(54) **ANLAGE UND VERFAHREN ZUR BEHANDLUNG VON VERUNREINIGTEM ABWASSER**
SYSTEM AND METHOD FOR TREATING CONTAMINATED WASTEWATER
INSTALLATION ET PROCÉDÉ POUR TRAITER LES EAUX USÉES NON ÉPURÉES

(30) Priorität: 17.06.2013 DE 102013211252
(43) Veröffentlichungstag der Anmeldung: 27.04.2016
(73) Patentinhaber: Robert Bosch GmbH, 70442 Stuttgart (DE)
(72) Erfinder: SACHS, Dimitri, 71282 Hemmingen (DE); MUTSCHLER, Bernhard, 70839 Gerlingen (DE); KORZ, Juergen, 71665 Vaihingen/Enz (DE); JUNG, Darius, 70184 Stuttgart (DE); SCHWENDELE, Josef, 73312 Geislingen (DE); PETTERSCH, Michael, 70825 Korntal-Muenchingen (DE); KORF, Philipp, 71723 Grossbottwar (DE)
(86) Internationale Anmeldenummer: PCT/EP2014/060939
(87) Internationale Veröffentlichungsnummer: WO 2014/202349

(56) Entgegenhaltungen:
- EP-A1- 0 567 914
- WO-A1-2013/031689
- DE-A1-102011 011 293
- JP-A- 2003 236 558
- JP-A- 2006 167 611

## Beschreibung

Die Erfindung betrifft eine Anlage zur Behandlung von verunreinigtem Abwasser, aufweisend eine in einen Separator einmündende Zulaufleitung und den Separator verlassende Ablaufleitung, die direkt oder indirekt in eine Zugangsleitung einer Filtrationsanlage einmündet, und wobei die Filtrationsanlage eine Permeat-Ausgangsleitung und eine Konzentrat-Ausgangsleitung aufweist. Weiterhin betrifft die Erfindung ein Verfahren zur Behandlung eines verunreinigten Abwassers.

### Stand der Technik

Eine derartige Anlage und ein derartiges Verfahren ist aus der EP 0 715 902 A1 bekannt. Dieses Verfahren und diese Anlage sind zur thermischen Abtrennung von Schadstoffen aus kontaminiertem Behandlungsgut ausgelegt. Dabei wird das Behandlungsgut zunächst mit Heißdampf behandelt, indem es durch eine entsprechende Bedampfungsvorrichtung geführt wird. Danach wird das Behandlungsgut einem Kondensator zugeführt, an dem sich ein als Drei-Phasen-Separator ausgebildeter Separator anschließt. Dieser Drei-Phasen-Separator weist eine Zulaufleitung auf, über die aus dem Behandlungsgut abgeschiedenes verunreinigtes Abwasser dem Drei-Phasen-Separator zugeführt wird. Aus dem Separator wird das zumindest vorgereinigte Abwasser als Wasser über eine Ablaufleitung abgeführt, die direkt mit einer Zugangsleitung einer als Ultrafiltrationsanlage ausgebildeten Filtrationsanlage verbunden ist. Das die Ultrafiltrationsanlage über eine Permeat-Ausgangsleitung verlassende Permeat wird anschließend einer Vorrichtung zur Umkehrosmose und nachfolgenden Anlage zur thermischen Entgasung zugeführt.

Aus der DE 10 2011 011 293 A1 sind ein Verfahren und eine Anlage zur Aufbereitung von Schwimmbeckenwasser bekannt, wobei auf einer unterhalb des Schwimmbeckens gelegenen geodätischen Höhe ein Schwallwasserbehälter angeordnet ist. Im freien Gefälle im Zulauf zum Schwallwasserbehälter ist eine Partikelfiltereinheit angeordnet. In einem ersten Aufbereitungsschritt wird eine Partikelfiltration eines Teilstromes oder bis zu 100% des aufzubereitenden Wassers mittels der Partikelfiltereinheit im freien Gefälle durchgeführt. In einem zweiten Aufbereitungsschritt wird eine Ultrafiltration mittels einer Membranfiltereinheit eines Teilstromes von 0% bis 40% des aufzubereitenden Wassers und/oder eine Aktivkohlefiltration mittels einer Aktivkohlefiltereinheit des Vollstromes oder eines Teilstromes des aufzubereitenden Wassers durchgeführt.

Aus der WO 2013/031689 A1 ist ein Verfahren zur Reinigung von Wasser bekannt, das eine radioaktive Substanz und/oder ein Schwermetall enthält. Dabei wird eine Humussubstanz mit dem Wasser gemischt. Anschließend wird eine fest-flüssig Trennung durchgeführt.

Aus der EP 0 567 914 A1 sind ein Verfahren und eine Vorrichtung zur Reinigung von Abwasser bekannt. Dabei wird das Abwasser zunächst in einem Abwasserauffangbehälter aufgefangen, wo sich ein Sediment bildet. Der Überstand des Abwassers wird im Cross-Flow-Verfahren anschließend filtriert. Das verunreinigte Abwasser gelangt aus einer Anlage zunächst in den Auffangbehälter und wird anschließend über eine Verbindungsleitung der Cross-Flow-Filtrationseinrichtung zugeführt. Über eine Filtratleitung wird das Filtrat einem Aktivkohle-Adsorptionsfilter zugeführt und kann so in die Kanalisation gelangen. Von der Filtratleitung kann eine Rückführleitung abzweigen, die in einen Brauchwasserbehälter mündet.

Der Erfindung liegt die Aufgabe zugrunde, eine Anlage und ein Verfahren zur Behandlung von verunreinigtem Abwasser bereitzustellen beziehungsweise anzugeben, die bei geringem Bauaufwand effektiv und zuverlässig arbeiten.

### Offenbarung der Erfindung

### Vorteile der Erfindung

Diese Aufgabe wird erfindungsgemäß dadurch gelöst, dass die Permeat-Ausgangsleitung steuerbar mit der Zulaufleitung verschaltet ist. Das entsprechende Verfahren zur Behandlung von verunreinigtem Abwasser sieht vor, dass das Permeat in die Zulaufleitung des Separators zurückführbar ist. Dadurch, dass das Permeat steuerbar in die Zulaufleitung zurückführbar ist, ist es möglich, das Permeat erneut dem Separator zuzuführen und die in dem Permeat noch beispielsweise vorhandenen Fremdbestandteile, beispielsweise Schwermetalle in Form von beispielsweise Schlamm, abzuscheiden. Dadurch ist eine effektive Nutzung der Anlage möglich, die darüber hinaus zuverlässig arbeitet. Das Abwasser ist nicht ausschließlich ein Abwasser in Form von verunreinigtem H₂O, sondern kann auch eine nahezu beliebige Flüssigkeit oder Emulsion sein, die mit beispielsweise Feststoffen und Ölen sowie mit gegebenenfalls weiteren Substanzen verunreinigt ist. Insofern ist im Rahmen der Erfindung der Begriff Abwasser als ein Gattungsbegriff zu verstehen.

Erfindungsgemäß ist zwischen der Abführleitung und der Zugangsleitung ein Arbeitsbehälter angeordnet, wobei die Permeat-Ausgangsleitung mit dem Arbeitsbehälter in allgemeiner Ausgestaltung in beliebiger Form verbindbar ist. Der Arbeitsbehälter wird dabei von einer Heizeinrichtung beispielsweise auf eine konstante Temperatur von 50° Celsius erhitzt. In diesen Arbeitsbehälter wird somit das den Separator über die Ablaufleitung verlassende (vorgereinigte) aus dem Abwasser herausgetrennte Wasser als auch insbesondere das Permeat bedarfsweise neben einem die Filtrationsanlage verlassenden Konzentrat gesammelt.

Erfindungsgemäß ist der Arbeitsbehälter über eine Rückführleitung mit der Zulaufleitung verbunden. Über diese Rückführleitung wird das Wasser beziehungsweise das Permeat (neben dem Konzentrat) zurück in die Zulaufleitung zu dem Separator zurück geleitet.

Um diese Rückführung steuern zu können, ist erfindungsgemäß in der Rückführleitung ein Rückführsperrventil angeordnet. Für den Fall, dass das Rückführsperrventil geöffnet ist, ist ein Zulaufsperrventil, das einen Pufferbehälter für verunreinigtes Abwasser mit der Zulaufleitung verbindet, geschlossen. Dadurch können das den Separator verlassende Wasser und das die Filtrationsanlage verlassende Konzentrat bis zur Erreichung eines vorgegebenen Abscheidegrades den Separator (und die Filtrationsanlage) durchlaufen. Daneben kann aber erfindungsgemäß auch das Permeat zur Abscheidung von beispielsweise Schwermetall in den Separator zurückgeleitet werden.

Erfindungsgemäß weist die Permeat-Ausgangsleitung eine Analyseeinrichtung für Schwermetalle auf. Diese Analyseeinrichtung überwacht vorzugsweise kontinuierlich das die Filtrationsanlage verlassende Permeat auf das Überschreiten eines Grenzwerts für Schwermetalle. Die Analyseeinrichtung kann aber auch zur Detektion von anderen Stoffen oder Substanzen ausgelegt sein, die aus dem Permeat ausgeschieden werden sollen.

In Weiterbildung der Erfindung ist vorgesehen, dass stromabwärts der Analyseeinrichtung von der Permeat-Ausgangsleitung an einem Abzweig eine von einem Rückströmleitungsventil beherrschte und in den Arbeitsbehälter einmündende Rückströmleitung abzweigt. Wird von der Analyseeinrichtung ein Überschreiten eines Grenzwertes beispielsweise für Schwermetalle detektiert, wird das Rückströmleitungsventil geöffnet und gleichzeitig ein in weiterer Ausgestaltung der Erfindung vorgesehenes Permeat-Abflussventil, das stromabwärts des Abzweigs der Rückströmleitung in die Permeat-Ausgangsleitung angeordnet ist, geschlossen. In diesem Betriebszustand wird dann das beispielsweise mit Schwermetallen belastete Permeat in den Arbeitsbehälter und weiter über die Rückführleitung in die Zulaufleitung zurückgeführt. Dabei wird dann erfindungsgemäß über eine ebenfalls in die Zulaufleitung einmündende Fällungsmittelleitung ein Fällungsmittel eingeleitet. Dieses durch die Fällungsmittelleitung ortsnah zu der Einmündung der Rückführleitung in die Zulaufleitung ebenfalls in die Zulaufleitung eingeführte Fällungsmittel reagiert mit dem in die Zulaufleitung eingeführten Permeat, wobei folglich in diesem Betriebszustand die Zulaufleitung als Reaktionsstrecke dient. Das Reaktionsprodukt wird dem Separator zugeführt, in dem das Schwermetall als Schlamm oder als Ölschlamm separiert wird und dem somit das den Separator verlassenden Wasser entzogen wird. Bei einem nachfolgenden Durchgang durch die Filtrationsanlage fällt das die Filtrationsanlage verlassende Permeat bezüglich einer Schwermetallbelastung unter einen vorgegebenen Grenzwert, und die Rückführung des Permeats kann durch Verschluss des Rückströmleitungsventils und Öffnen des Permeat-Abflussventils beendet werden. Gleichzeitig wird die Zuführung von Fällungsmittel in die Zulaufleitung zu dem Separator gestoppt.

In Weiterbildung der Erfindung ist der Separator ein Drei-Phasen-Separator für insbesondere Schlamm und Öl, die aus dem verunreinigten Abwasser herausgelöst werden. Der Schlamm wird in einem geeigneten, mit dem Drei-Phasen-Separator verbundenen Sammelbehälter und das Öl in einem Ölsammelbehälter gesammelt und bedarfsweise entsorgt.

In Weiterbildung der Erfindung ist die Filtrationsanlage eine Ultrafiltrationsanlage, mit der mit einem Filtrationsverfahren aus dem Bereich der Membrantechnik sich makromolekulare Substanzen und kleine Partikel aus dem zugeführten Medium abtrennen und auch konzentrieren lassen. Die Anlage und das Verfahren ist grundsätzlich zur "Reinigung" eines beliebig verunreinigten Abwassers geeignet, wobei der Begriff Abwasser - wie ausgeführt - nicht auf ein Fluid in Form von H₂O beschränkt ist. Ebenso können in dem Separator neben dem Schlamm, der nahezu beliebige abgeschiedene Feststoffe oder Partikel beinhaltet, die mit einer geringen Restmenge von Abwasser den Schlamm bilden, auch andere Bestandteile als Öl abgetrennt werden.

Ist anschließend der Arbeitsbehälter durch Abscheidung durch den Separator und Abführung von Permeat in einen Abfluss bis auf ein vorgegebenes Niveau entleert, wird das Rückführsperrventil geschlossen und das Zulaufsperrventil geöffnet. Dadurch wird der Separator und anschließend der Arbeitsbehälter erneut befüllt. Dieser Prozess wird so oft wiederholt, bis Membranen der Filtrationsanlage aufgrund von Verschmutzung gereinigt, beispielsweise gespült werden müssen.

Weitere vorteilhafte Ausgestaltungen der Erfindung sind der Zeichnungsbeschreibung zu entnehmen, in der ein in den Figuren dargestelltes Ausführungsbeispiel der Erfindung näher beschrieben ist.

### Kurze Beschreibung der Zeichnung

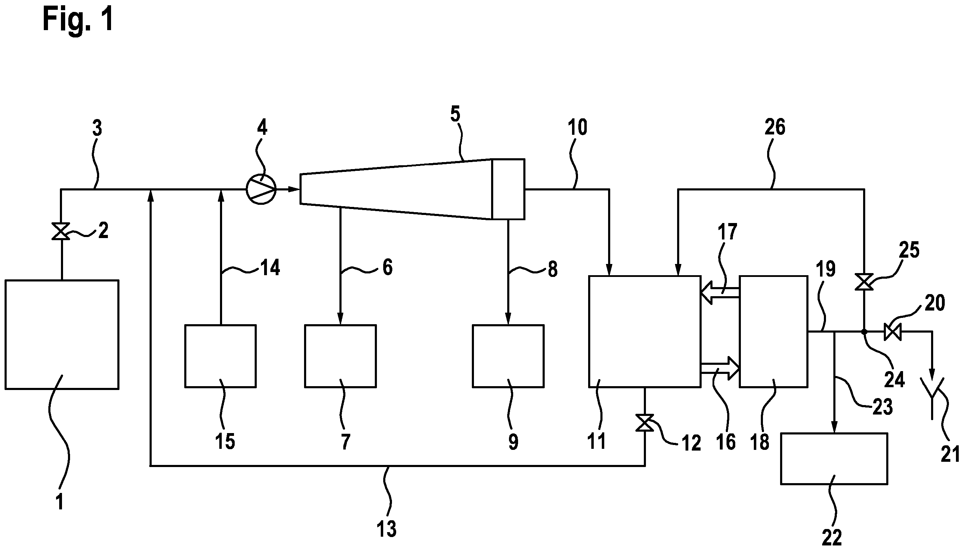

Die einzige Figur 1 zeigt eine schematische Darstellung der Anlage zur Behandlung von verunreinigtem Abwasser mit den Einzelkomponenten.

### Ausführungsform der Erfindung

Die Figur 1 zeigt eine Anlage zur Behandlung von verunreinigtem Abwasser mit den notwendigen Komponenten. Eingangs der Anlage ist ein Pufferbehälter 1 über ein Zulaufsperrventil 2 mit einer Zulaufleitung 3, in die eine Pumpe 4 eingesetzt ist, mit einem Separator 5 in Form eines Drei-Phasen-Separators (beispielsweise in der Bauform als sogenannter Trikanter) verbunden. In dem Pufferbehälter 1 ist verunreinigtes Abwasser aus einem Industriebetrieb bevorratet, wobei das Abwasser insbesondere Feststoffe und Öl sowie gegebenenfalls weitere Substanzen, beispielsweise Schwermetalle, enthält. Das Abwasser ist nicht ausschließlich ein Abwasser in Form von verunreinigtem H₂O, sondern kann auch eine nahezu beliebige Flüssigkeit oder Emulsion sein, die beispielsweise mit Feststoffen und Öl sowie gegebenenfalls mit weiteren Substanzen verunreinigt ist. Insofern ist hier Abwasser als ein Gattungsbegriff zu verstehen. Auch kann das Abwasser mit einem anderen Fluid als Öl verunreinigt sein, das neben den Feststoffen aus dem Abwasser herausgetrennt werden soll. Auch ist es denkbar, dass mehrere Fluide das Abwasser verunreinigen, die aber gemeinsam aus dem Abwasser herausgetrennt werden können. Feststoffe können beispielsweise metallische Werkstoffe oder Kunststoffwerkstoffe sein, die zusammen mit dem Abwasser einen Schlamm bilden.

In dem dargestellten Ausführungsbeispiel ist an dem Drei-Phasen-Separator 5 eine Schlammabführleitung 6 angebunden, die in einen Schlammbehälter 7 führt. In dem Schlammbehälter 7 werden folglich die Feststoffe zusammen mit einer Restmenge von Abwasser in Form von Schlamm gesammelt. Weiterhin ist an dem Drei-Phasen-Separator 5 eine Ölabführleitung 8 angeschlossen, die in einen Ölbehälter 9 mündet. Der Drei-Phasen-Separator 5 arbeitet nach dem Prinzip einer Trennung mittels Zentrifugalkräften, wobei verschiedene Phasen unterschiedlicher Dichten voneinander getrennt werden. Im vorliegenden Ausführungsbeispiel wird dementsprechend Schlamm und Öl von dem verunreinigten Abwasser getrennt, das als gereinigtes Abwasser in Form von Wasser den Drei-Phasen-Separator 5 über eine Ablaufleitung 10 verlässt. Dabei sind in dem den Drei-Phasen-Separator 5 über die Ablaufleitung 10 verlassenden Wasser nach einem einmaligen Durchgang noch Reste von Schlamm und Öl sowie gegebenenfalls weitere Substanzen enthalten. Die Ablaufleitung 10 ist mit einem Arbeitsbehälter 11 verbunden, in den das Wasser eingeleitet wird. Der Arbeitsbehälter 11 ist über ein Rückführsperrventil 12 mit einer Rückführleitung 13 verbunden, die stromabwärts des Zulaufsperrventils 2 in die Zulaufleitung 3 einmündet. Weiterhin stromabwärts der Rückführleitung 13 mündet in die Zulaufleitung 3 eine Fällungsmittelleitung 14 ein, die mit einem Fällungsmitteltank 15 verbunden ist. Das in dem Fällungsmitteltank 15 befindliche Fällungsmittel kann bedarfsweise in die Zulaufleitung 3 eingeleitet werden. Hierauf wird später noch eingegangen.

Der Arbeitsbehälter 11 ist weiterhin über eine Zugangsleitung 16 und eine Konzentrat-Ausgangsleitung 17 mit einer Filtrationsanlage 18 in Form einer Ultrafiltrationsanlage verbunden. Mit der Ultrafiltrationsanlage können Partikel in einer Größe von circa 0,1 bis 0,01 µm aus dem zugeführten Fluid, das zunächst einmal das den Separator 5 verlassende Wasser ist, abgetrennt werden. Diese Partikel bilden das Konzentrat, das über die Konzentrat-Ausgangsleitung 17 wiederum dem Arbeitsbehälter 11 zugeführt wird. Die Filtrationsanlage 18 weist weiterhin eine Permeat-Ausgangsleitung 19 auf, über die das Permeat, das im vorliegenden Ausführungsbeispiel weiter gereinigtes Wasser ist, die Filtrationsanlage 18 verlässt. Die Permeat-Ausgangsleitung 19 ist über ein Permeat-Abflussventil 20 mit einem Abfluss 21 für das endgültig gereinigte Wasser verbunden. In die Permeat-Abflussleitung 19 ist eine Analyseeinrichtung 22 direkt oder über eine Stichleitung 23 eingeschaltet, mit der das die Permeat-Abflussleitung 19 durchströmende Permeat auf Vorhandensein von bestimmten Verunreinigungen analysiert wird. Diese Verunreinigungen sind im Ausführungsbeispiel Schwermetalle, wobei mit der Analyseeinrichtung 22 das Überschreiten einer vorgegebenen Konzentration von Schwermetallen in dem Permeat bestimmt beziehungsweise gemessen wird. Stromabwärts der Analyseeinrichtung 22 beziehungsweise der Stichleitung 23 zu der Analyseeinrichtung 22 ist ein Abzweig 24 angeordnet, der über ein Rückströmleitungsventil 25 mit einer Rückströmleitung 26 verbunden ist, die wiederum in den Arbeitsbehälter 11 einmündet.

Nachfolgend werden die Funktion der Anlage und das Verfahren zur Behandlung von verunreinigtem Abwasser ebenfalls anhand der Figur, die auch ein Ablaufdiagramm darstellt, beschrieben. Zunächst wird aus dem Pufferbehälter 1 verunreinigtes Abwasser dem Separator 5 zugeführt, in dem Schlamm und Öl aus dem verunreinigten Abwasser getrennt werden. Das gereinigte Abwasser verlässt den Separator 5 als (zumindest) teilweise gereinigtes Wasser und es wird dem Arbeitsbehälter 11 eine solche Menge von verunreinigtem Abwasser zugeführt, bis dieser gefüllt ist. Nach der Befüllung des Arbeitsbehälters 11, der im Übrigen, beispielsweise mittels einer Heizeinrichtung, auf eine Temperatur von konstant 50° Celsius erwärmt wird, wird das Zulaufsperrventil 2 geschlossen und das Rückführsperrventil 12 geöffnet, so dass der Separator 5 im Kreislauf aus dem Arbeitsbehälter 11 beschickt wird. Danach wird (zusätzlich) die Filtrationsanlage 18 in Betrieb genommen. Die Filtrationsanlage 18 scheidet aus dem zugeführten (noch leicht verunreinigten) Wasser Konzentrat ab, das zurück in den Arbeitsbehälter 11 geleitet wird. Das abschließend gereinigte Wasser (gereinigt nach definierten Vorgabekriterien) verlässt die Filtrationsanlage 18 und gelangt in den Abfluss 21. Während des Filtrationsprozesses steigt in dem Arbeitsbehälter 11 insbesondere die Ölkonzentration, so dass sich zunehmend freies Öl bildet, das über die Rückführleitung 13 wieder dem Separator 5 zugeführt wird und das von dem Separator in den Ölbehälter 9 abgetrennt wird.

Das Permeat wird unter Überwachung durch die Analyseeinrichtung 22 kontinuierlich auf das Vorhandensein von Schwermetallen überwacht. Wird im Permeat ein Grenzwert für Schwermetalle überschritten, schließt das Permeat-Abflussventil 20 und das Rückströmleitungsventil 25 öffnet, so dass das Permeat in den Arbeitsbehälter 11 zurückgeführt wird und nicht mehr in den Abfluss 21 gelangt. Von dem Arbeitsbehälter 11 gelangt das Permeat über die Rückführleitung 13 zurück in die Zulaufleitung 3 zu dem Separator 5. Zur Entfernung der Schwermetalle aus dem zurückgeführten Permeat erfolgt eine dosierte Einleitung von Fällungsmitteln aus dem über die Fällungsmittelleitung 14 mit der Zulaufleitung 3 verbundenen Fällungsmitteltank 15 eben in die Zulaufleitung 3, in die das belastete Permeat über die Rückführleitung 13 ortsnah zu der Einmündung der Fällungsmittelleitung 14 eingeleitet wird. In diesem Betriebszustand ist dementsprechend das Zulaufsperrventil 2 geschlossen und das Rückführsperrventil 12 geöffnet. Die Zulaufleitung 3 zu dem Separator 5 dient bei diesem Betriebszustand als Reaktionsstrecke für die Fällungschemikalien mit dem rückgeführten Permeat. Im Separator 5 erfolgt die Abtrennung beziehungsweise Entwässerung des schwermetallhaltigen Schlamms in den Schlammbehälter und/oder den Ölbehälter 9. Die Dosierung des Fällungsmittels oder der Fällungsmittel erfolgt beispielsweise in Abhängigkeit von der Schwermetallkonzentration und von dem pH-Wert im Permeat.

Sinkt die Schwermetallkonzentration unter den vorgegebenen Grenzwert im Permeat, was durch die Analyseeinrichtung 22 fortlaufend kontrolliert wird, öffnet das Permeat-Abflussventil 20 und das Rückströmleitungsventil 25 wird wieder geschlossen. Das Permeat wird folglich wieder in den Abfluss 21 geleitet, während die Dosierung des Fällungsmittels eingestellt wird. Wird später wieder eine zu hohe Schwermetallkonzentration gemessen, wird der zuvor geschilderte Vorgang wieder erneut eingeleitet.

Im Laufe des Prozesses nimmt der Füllstand im Arbeitsbehälter 11 durch den Ablauf des Permeats in den Abfluss 21 zunehmend ab. Beim Erreichen eines vorgegebenen minimalen Niveaus wird der Arbeitsbehälter 11, wie zuvor beschrieben, über den Separator 5 erneut befüllt, wobei das Zulaufsperrventil 2 wieder öffnet und das Rückführsperrventil 12 schließt.

Der Prozess wird insgesamt so oft wiederholt oder fortgesetzt, wie die Membranen der Filtrationsanlage 18 aufgrund von Verschmutzung gereinigt, beispielsweise gespült werden müssen.

## Patentansprüche

1. Anlage zur Behandlung von verunreinigtem Abwasser, aufweisend eine in einen Separator (5) einmündende Zulaufleitung (3) und eine den Separator (5) verlassende Ablaufleitung (10), die über eine Zugangsleitung (16) in eine Filtrationsanlage (18) einmündet, welche eine Permeat-Ausgangsleitung (19) und eine Konzentrat-Ausgangsleitung (17) aufweist, **dadurch gekennzeichnet, dass** zur Rückführung von Permeat die Permeat-Ausgangsleitung (19) steuerbar mit der Zulaufleitung (3) verschaltet ist, dass zwischen der Ablaufleitung (10) und der Zugangsleitung (16) ein Arbeitsbehälter (11) angeordnet ist, dass die Permeat-Ausgangsleitung (19) mit dem Arbeitsbehälter (11) verbunden ist, dass der Arbeitsbehälter (11) über eine Rückführleitung (13) mit der Zulaufleitung (3) verbunden ist, dass in der Rückführleitung (13) ein Rückführsperrventil (12) angeordnet ist, dass der Arbeitsbehälter (11) weiterhin über die Konzentrat-Ausgangsleitung (17) mit der Filtrationsanlage (18) verbunden ist, dass die Permeat-Ausgangsleitung (19) der Filtrationsanlage (18) eine Analyseeinrichtung (22) für Schwermetalle aufweist und dass in die Zulaufleitung (3) eine Fällungsmittelleitung (14) einmündet.

2. Anlage nach Anspruch 1, **dadurch gekennzeichnet, dass** stromabwärts der Analyseeinrichtung (22) von der Permeat-Ausgangsleitung (19) an einem Abzweig (24) eine von einem Rückströmleitungsventil (25) beherrschte und in den Arbeitsbehälter (11) einmündende Rückströmleitung (26) abzweigt.

3. Anlage nach Anspruch 2, **dadurch gekennzeichnet, dass** die Permeat-Ausgangsleitung (19) stromabwärts des Abzweigs (24) der Rückströmleitung (26) ein Permeat-Abflussventil (20) aufweist.

4. Anlage nach einem der vorherigen Ansprüche, **dadurch gekennzeichnet, dass** der Separator (5) ein Drei-Phasen-Separator für insbesondere eine Abscheidung von Schlamm und Öl aus dem Abwasser ist.

5. Anlage nach einem der vorherigen Ansprüche, **dadurch gekennzeichnet, dass** die Filtrationsanlage (18) eine Ultrafiltrationsanlage ist.

6. Verfahren zur Behandlung von verunreinigtem Abwasser unter Durchströmung eines eine Zulaufleitung (3) aufweisenden Separators (5), aus dem aus dem Abwasser herausgetrenntes Wasser in eine Ablaufleitung (10) austritt, und wobei das Wasser anschließend über eine Zugangsleitung (16) einer Filtrationsanlage (18) zugeführt wird, in der eine Trennung des Wassers in ein in eine Konzentrat-Ausgangsleitung (17) abgeführtes Konzentrat und ein in eine Permeat-Ausgangsleitung (19) abgeführtes Permeat erfolgt, **dadurch gekennzeichnet, dass** das Permeat über einen zwischen der Ablaufleitung (10) und der Zugangsleitung (16) angeordneten Arbeitsbehälter (11) in die Zulaufleitung (3) des Separators (5) steuerbar zurückführbar ist, wobei die Permeat-Ausgangsleitung (19) mit dem Arbeitsbehälter (11) verbunden ist, wobei der Arbeitsbehälter (11) über eine Rückführleitung (13) mit der Zulaufleitung (3) verbunden ist und wobei in der Rückführleitung (13) ein Rückführsperrventil (12) angeordnet ist, dass der Arbeitsbehälter (11) weiterhin über die Konzentrat-Ausgangsleitung (17) mit der Filtrationsanlage (18) verbunden ist, dass das abgeleitete Permeat von einer Analyseeinrichtung (22) auf das Vorliegen eines Grenzwertes für ein Schwermetall überwacht wird und dass das Permeat bei Überschreitung des Grenzwertes in die Zulaufleitung (3) zu dem Separator (5) zurückgeführt wird und gleichzeitig dem Separator (5) ein Fällungsmittel zugeführt wird.

7. Verfahren nach Anspruch 6, **dadurch gekennzeichnet, dass** das Fällungsmittel durch eine Fällungsmittelleitung (14) ortsnah zu der Einmündung der Rückführleitung (13) in die Zulaufleitung (3) ebenfalls in die Zulaufleitung (3) eingeleitet wird, und dass die weitere Zulaufleitung (3) zu dem Separator (5) als Reaktionsstrecke für das Fällungsmittel mit dem Permeat dient.

8. Verfahren nach Anspruch 6 oder 7, **dadurch gekennzeichnet, dass** die Dosierung des Fällungsmittels in Abhängigkeit einer Konzentration des Schwermetalls und von einem pH-Wert in dem Permeat erfolgt.

9. Verfahren nach einem der Ansprüche 6 bis 8, **dadurch gekennzeichnet, dass** in dem Separator (5) das Schwermetall als Schlamm aus dem Permeat abgetrennt wird.

## Claims

1. System for treating contaminated wastewater, having an inflow line (3) which opens out into a separator (5), and having an outflow line (10) which departs from the separator (5) and which opens out via an access line (16) into a filtration system (18) which has a permeate outlet line (19) and has a concentrate outlet line (17), **characterized in that** the permeate outlet line (19) is connected in a controllable manner to the inflow line (3) for the purpose of recirculating permeate, **in that** a working tank (11) is arranged between the outflow line (10) and the access line (16), **in that** the permeate outlet line (19) is connected to the working tank (11), **in that** the working tank (11) is connected to the inflow line (3) via a recirculation line (13), **in that** a recirculation shut-off valve (12) is arranged in the recirculation line (13), **in that** the working tank (11) is furthermore connected to the filtration system (18) via the concentrate outlet line (17), **in that** the permeate outlet line (19) of the filtration system (18) has an analysis device (22) for heavy metals, and **in that** a precipitant line (14) opens out into the inflow line (3).

2. System according to Claim 1, **characterized in that**, downstream of the analysis device (22), a return-flow line (26), which is governed by a return-flow line valve (25) and opens out into the working tank (11), branches off from the permeate outlet line (19) at a branch (24).

3. System according to Claim 2, **characterized in that** the permeate outlet line (19) has a permeate drain valve (20) downstream of the branch (24) of the return-flow line (26).

4. System according to one of the preceding claims, **characterized in that** the separator (5) is a three-phase separator for, in particular, a separation of sludge and oil from the wastewater.

5. System according to one of the preceding claims, **characterized in that** the filtration system (18) is an ultrafiltration system.

6. Method for treating contaminated wastewater by way of flow through a separator (5) which has an inflow line (3) and from which water separated out from the wastewater exits into an outflow line (10), and wherein the water is then supplied via an access line (16) to a filtration system (18) in which the water is separated into a concentrate, which is discharged into a concentrate outlet line (17), and a permeate, which is discharged into a permeate outlet line (19), **characterized in that** the permeate is able to be recirculated in a controllable manner into the inflow line (3) of the separator (5) via a working tank (11) which is arranged between the outflow line (10) and the access line (16), wherein the permeate outlet line (19) is connected to the working tank (11), wherein the working tank (11) is connected to the inflow line (3) via a recirculation line (13), and wherein a recirculation shut-off valve (12) is arranged in the recirculation line (13), **in that** the working tank (11) is furthermore connected to the filtration system (18) via the concentrate outlet line (17), **in that** the extracted permeate is monitored with respect to a limit value for a heavy metal by an analysis device (22), and **in that**, in the case of the limit value being exceeded, the permeate is recirculated into the inflow line (3) to the separator (5) and at the same time a precipitant is supplied to the separator (5).

7. Method according to Claim 6, **characterized in that**, the precipitant is, in the vicinity of the opening-out of the recirculation line (13) into the inflow line (3), introduced by way of a precipitant line (14) likewise into the inflow line (3), and **in that** the further inflow line (3) to the separator (5) serves as a reaction section for the precipitant and the permeate.

8. Method according to Claim 6 or 7, **characterized in that** the dosing of the precipitant is realized in a manner dependent on a concentration of the heavy metal and on a pH value of the permeate.

9. Method according to one of Claims 6 to 8, **characterized in that**, in the separator (5), the heavy metal is separated as sludge from the permeate.

## Revendications

1. Installation de traitement de l'eau usée non épurée, présentant un conduit d'amenée (3) débouchant dans un séparateur (5) et un conduit de débordement (10) qui quitte le séparateur (5) et qui débouche par l'intermédiaire d'un conduit d'accès (16) dans une installation de filtration (18) qui présente un conduit (19) de sortie de perméat et un conduit (17) de sortie de concentré,
**caractérisée en ce que**
pour renvoyer le perméat, le conduit (19) de sortie de perméat est raccordé de manière contrôlée au conduit d'amenée (3),
**en ce qu'**un récipient de travail (11) est disposé entre le conduit de débordement (10) et le conduit d'accès (16),
**en ce que** le conduit (19) de sortie de perméat est relié au récipient de travail (11),
**en ce que** le récipient de travail (11) est relié au conduit d'amenée (3) par un conduit de recirculation (13),
**en ce qu'**une soupape (12) de blocage de la recirculation est disposée dans le conduit de recirculation (13),
**en ce que** le récipient de travail (11) est en outre relié par le conduit (17) de sortie de concentré à l'installation de filtration (18),
**en ce que** le conduit (19) de sortie de perméat de l'installation de filtration (18) présente un dispositif d'analyse (22) prévu pour les métaux lourds et
**en ce qu'**un conduit (14) d'agent de précipitation débouche dans le conduit d'amenée (3).

2. Installation selon la revendication 1, **caractérisée en ce qu'**un conduit de renvoi (26) contrôlé par une soupape (25) de conduit de renvoi et débouchant dans le récipient de travail (11) dérive du conduit (19) de sortie de perméat au niveau d'une dérivation (24) en aval du dispositif d'analyse (22).

3. Installation selon la revendication 2, **caractérisée en ce que** le conduit (19) de sortie de perméat présente en aval de la dérivation (24) du conduit de renvoi (26) une soupape (20) d'évacuation de perméat.

4. Installation selon l'une des revendications précédentes, **caractérisée en ce que** le séparateur (5) est un séparateur en trois phases, en particulier pour séparer la boue et l'huile de l'eau usée.

5. Installation selon l'une des revendications précédentes, **caractérisée en ce que** l'installation de filtration (18) est une installation d'ultrafiltration.

6. Procédé pour traiter de l'eau usée non épurée en lui faisant traverser un séparateur (5) présentant un conduit d'amenée (3) duquel de l'eau séparée de l'eau usée sort dans un conduit de débordement (10), l'eau étant ensuite amenée par l'intermédiaire d'un conduit d'accès (16) dans une installation de filtration (18) dans laquelle a lieu une séparation de l'eau en un concentré évacué dans un conduit (17) de sortie de concentré et un perméat évacué dans un conduit (19) de sortie de perméat,
**caractérisé en ce que**
le perméat peut être renvoyé de manière contrôlée dans le conduit d'amenée (3) du séparateur (5) par l'intermédiaire d'un récipient de travail (11) disposé entre le conduit de débordement (10) et le conduit d'accès (16), le conduit (19) de sortie de perméat étant relié au récipient de travail (11), le récipient de travail (11) étant relié au conduit d'amenée (3) par un conduit de recirculation (13), et une soupape (12) de blocage de la recirculation étant disposée dans le conduit de recirculation (13),
**en ce que** le récipient de travail (11) est en outre relié par l'intermédiaire du conduit (17) de sortie de concentré à l'installation de filtration (18),
**en ce que** le perméat évacué est surveillé par un dispositif d'analyse (22) pour vérifier s'il respecte une valeur limite en métaux lourds et
**en ce que** si le perméat dépasse la valeur limite, il est renvoyé dans le séparateur (5) dans le conduit d'amenée (3), et un agent de précipitation est simultanément alimenté au séparateur (5).

7. Procédé selon la revendication 6, **caractérisé en ce que** l'agent de précipitation est également introduit dans le conduit d'amenée (3) par un conduit (14) d'agent de précipitation à proximité de l'embouchure du conduit de recirculation (13) dans le conduit d'amenée (3) et **en ce que** l'autre conduit d'amenée (3) conduisant au séparateur (5) sert de parcours de réaction pour l'agent de précipitation avec le perméat.

8. Procédé selon les revendications 6 ou 7, **caractérisé en ce que** le dosage de l'agent de précipitation s'effectue en fonction d'une concentration en métal lourd ou d'une valeur de pH dans le perméat.

9. Procédé selon l'une des revendications 6 à 8, **caractérisé en ce que** dans le séparateur (5), le métal lourd est séparé du perméat sous la forme d'une boue.
